Europäisches Patentamt

European Patent Office

Office européen des brevets

(11) Veröffentlichungsnummer: **0 030 918**

**A1**

(12) **EUROPÄISCHE PATENTANMELDUNG**

(21) Anmeldenummer: **80810379.0**

(22) Anmeldetag: **08.12.80**

(51) Int. Cl.³: **B 21 D 39/02**

(30) Priorität: **13.12.79 CH 11042/79**

(43) Veröffentlichungstag der Anmeldung:
**24.06.81 Patentblatt 81/25**

(84) Benannte Vertragsstaaten:
**CH DE FR GB IT LI NL SE**

(71) Anmelder: **CIBA-GEIGY AG**
**Patentabteilung Postfach**
**CH-4002 Basel(CH)**

(72) Erfinder: **Baur, Peter**
**Moosweg 41**
**CH-4125 Riehen(CH)**

(54) **Verfahren und Vorrichtung zur Applikation eines Klebefolienstreifens auf dem Rand eines Blechformteils.**

(57) Zur Herstellung der Falznaht wird der Randstreifen des einen Blechs unter Zwischenlage eines Klebstoff-Folienstreifens um den Rand des anderen Blechs (2) umgebördelt, das Ganze zusammengepresst, und anschliessend die Klebstoff-Folie unter Temperatureinwirkung gehärtet. Der Klebstoff-Folienstreifen (3F) wird vor der Umbördelung um den zu umbördelnden Blechrand (2a) geschlagen und dort mittels Druck und Wärme leicht fixiert. Die Applikation des Streifens (3F) erfolgt mittels zweier Backen (12,13), die zwischen sich einen dem Blechrand (2a) angepassten Schlitz (18) bilden. Der Streifen (3F) wird über den Schlitz (18) gelegt und das Blech (2) dann in den Schlitz eingeführt, wodurch sich der Streifen um die Blechkante faltet. Durch Schliessen der Backen und leichtes Pressen sowie gegebenenfalls durch leichtes Erwärmen des Blechs wird der Streifen am Blechrand fixiert.

Fig. 5

Croydon Printing Company Ltd.

CIBA-GEIGY AG                                    37-12632/+

Basel (Schweiz)


Verfahren und Vorrichtung zur Applikation eines Klebefolienstreifens
auf dem Rand eines Blechformteils.

Die Erfindung betrifft ein Verfahren und eine Vorrichtung zur Applikation eines Klebefolienstreifens auf dem Rand eines Blechformteils.

Das Verkleben von Falznahtverbindungen mittels druck- oder wärmehärtbarer Klebstoffe ist in der blechverarbeitenden Industrie weit
verbreitet. So ist es z.B. in der Autoindustrie üblich, Falznähte an
bestimmten Karosserieteilen auf diese Weise abzudichten und damit der
Korrosionsgefahr vorzubeugen.

In der Autoindustrie und ähnlichen Industriezweigen werden zur Herstellung solcher geklebten Falznahtverbindungen üblicherweise Klebstoffe in flüssiger oder pastöser Form verwendet, welche in Form
einer Raupe auf die zu verbindenden Blechteile appliziert werden.
Diese Applikationsmethode des Klebstoffs ist in verschiedener Hinsicht
unbefriedigend. Zum einen ist die damit erreichte Verteilung des Klebstoffs über die gesamte Falznaht nicht ausreichend gleichmässig,
was zu Korrosionsproblemen führen kann, und zum anderen sind Klebstoffe in flüssiger oder pastöser Form aus arbeitshygenischen Aspekten immer problematisch.

Bei der Herstellung von Konservendosen ist es, wie z.B. die
US-A 3 125 056 oder die FR-A 2 252 147 bzw. die BE-A 444 014 zeigen,
ebenfalls üblich, Falznähte zu verkleben bzw. mittels Klebstoff abzudichten. Der Klebstoff wird dabei auf die Bördelränder der miteinander
zu verbindenden Teile des Dosenkörpers entweder in flüssiger oder
pastöser Form durch Extrusion oder dergleichen oder aber auch in
Form eines Streifens einer Klebefolie aufgebracht.

- 2 -

Klebstoffe in Folienform, wie sie z.B. unter den Markenbezeichnungen
Araldit- und Redux-Klebfilm von der Anmelderin vertrieben werden,
finden nicht zuletzt aufgrund ihrer arbeitshygienischen Vorteile immer
weitere Verbreitung. Zum Verkleben der Falznähte von z.B. Autokarosserieteilen wurden solche Klebefolien bisher jedoch nicht verwendet.
Der Grund dafür liegt vor allem in den Schwierigkeiten bei der Applikation dieser Klebefolien. Bei Konservendosen sind alle zu falzenden
Bördelränder eben und haben gerade Kanten, sodass ein Folienstreifen
sehr einfach z.B. mittels einer Andruckrolle auf den Bördelrand aufgebracht werden kann. Bei Karosserieteilen hingegen haben die Falznähte
in der Regel einen wesentlich komplizierteren, oft räumlich gekrümmten
Verlauf, der die Aufbringung eines Klebefolienstreifens auf den Bördelrand sehr erschwert. Diese Schwierigkeiten sind besonders gross, wenn
der Bördelrand beidseitig mit Klebstoff versehen werden soll.

Durch die Erfindung sollen nun diese Schwierigkeiten beseitigt und
ein Verfahren geschaffen werden, welches eine einfache und mit
relativ wenig Aufwand maschinell realisierbare Applikation von Klebstoff in Folienstreifenform auf beiden Seiten des Rands eines beliebig
geformten Belchteils gestattet. Ferner soll durch die Erfindung eine
zur Durchführung dieses Verfahrens geeignete Vorrichtung bereitgestellt werden.

Das erfindungsgemässe Verfahren und die erfindungsgemässe Vorrichtung
sind in ihren Grundausführungen in den Patentansprüchen 1 und 5 beschrieben. Bevorzugte Ausführungsbeispiele sind in den übrigen
Patentansprüchen beschrieben.

Im folgenden wird die Erfindung anhand der Zeichnungen näher
erläutert. Es zeigen:

Fig. 1 einen Schnitt durch eine typische geklebte Falznahtverbindung,

Fig. 2 ein Ausführungsbeispiel der erfindungsgemässen Applikationsvorrichtung in schematischer Darstellung,

- 3 -

Fig. 3-6 vereinfachte Darstellungen der Vorrichtung nach Fig. 2 in
verschiedenen Betriebsphasen,

Fig. 7 einen Wandteil einer Autotüre als typisches Beispiel für ein
Blechformteil mit komplizierterem Verlauf des Falzrands und

Fig. 8 und 9 die dem Falzrand des Formteils nach Fig. 7 angepasste
Form der Pressbacken der Vorrichtung nach den Figuren
2-6 in Draufsicht und Seitenansicht entsprechend den
Linien VIII-VIII bzw. IX-IX der Fig. 2.

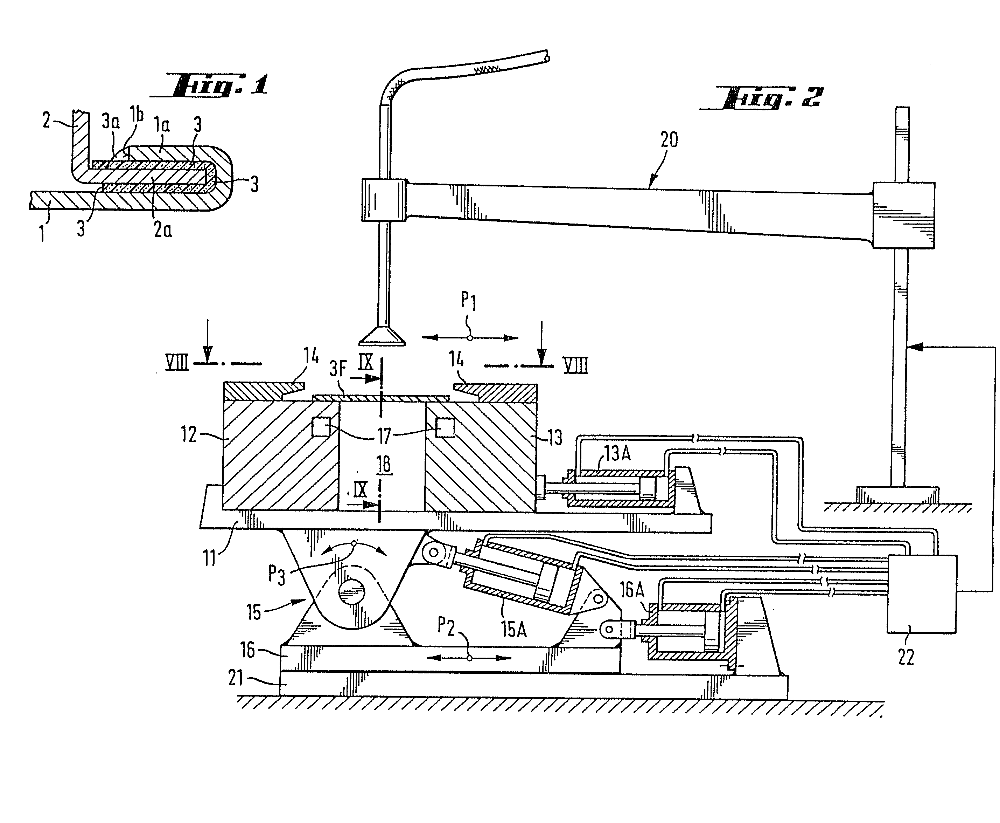

Bei der in Fig. 1 dargestellten Falznahtverbindung sind, wie bei Verbindungen dieser Art üblich, zwei Bleche 1 und 2 längs ihrer Ränder
durch eine Umbördelung miteinander verbunden. Bei den beiden Blechen
kann es sich beispielsweise um Karosserie-Teile von Kraftfahrzeugen
und dergleichen handeln. Der Randstreifen 1a des Blechs 1 ist um den
Randstreifen 2a des Blechs 2 umgeschlagen. Zwischen den beiden Blechen
befindet sich eine Klebstoffschicht 3, die den umbördelten Randstreifen 1a U-förmig umfasst.

Die Herstellung einer solchen Falznahtverbindung erfolgt in bekannter
Weise dadurch, dass der Klebstoff in Form eines Streifens einer wärme-
und/oder druckhärtbaren Klebefolie auf den bzw. die Ränder 1a bzw.
2a der Blechteile aufgebracht und dann der Randstreifen 1a um den
Randstreifen 2a unter gleichzeitiger Applikation von Wärme umgebördelt
wird. Gemäss der Erfindung erfolgt nun die Applikation des Klebefolienstreifens in der Weise, dass ein breiterer Streifen 3F U-förmig um
die Kante des in der Falznaht innen liegenden Randstreifens 2a umgeschlagen wird. Der genaue Verfahrensablauf wird nachstehend im
Zusammenhang mit der erfindungsgemässen Vorrichtung erläutert.

Die erfindungsgemässe Vorrichtung ist am detailliertesten in Fig. 2
dargestellt. Sie umfasst als wesentlichste Bestandteile zwei auf einem
Support 11 gegeneinander in Richtung des Pfeils $P_1$ verstellbare
Backen 12 und 13, die an ihrer Oberseite mit im Profil $\Gamma$- bzw.

- 4 -

galgenförmigen Halteelementen 14 ausgestattet sind. Die Relativverstellung der Backen erfolgt mittels eines Hydraulik-Zylinders 13A,
welcher am Support angeordnet ist und den Backen 13 bewegt.

Der Support 11 ist auf einem Schwenkgestell 15 montiert, das seinerseits auf einem Schlitten 16 angeordnet ist. Das Schwenkgestell 15
ist von einem weiteren Hydraulik-Zylinder 15A angetrieben und erlaubt
die Verschwenkung des Supports 11 in Richtung des Pfeils $P_3$ um 90°.
Der Schlitten 16 ist in einem ortsfesten Maschinengestell 21 in
Richtung des Pfeils $P_2$ hin und her bewegbar, zu seinem Antrieb ist
ein weiterer Hydraulik-Zylinder 16A vorgesehen.

Die beiden Backen 12 und 13 sind mit einem durch einen Kanal 17
schematisch angedeuteten System zur Kühlung ihrer mit den zu applizierenden Klebefolienstreifen 3F in Berührung kommenden Flächen
ausgestattet.

Ein gesamthaft mit 20 bezeichnetes Fördersystem beliebiger Bauart
führt die an geeigneter Stelle vorrätig gehaltenen Folienstreifen 3F
den Backen 12 und 13 zu.

Eine nur durch einen Kasten 22 angedeutete Steuerung steuert das
Fördersystem und die einzelnen Bewegungsabläufe der Backen, des
Schlittens und des Schwenkgestells. Die praktische Realisierung einer
solchen Steuerung liegt im Bereich des Könnens des Fachmanns und
braucht daher nicht erläutert zu werden.

Die beiden Backen 12 und 13 bilden zwischen sich einen Schlitz 18
variabler Weite, dessen geometrische Form an diejenige des Randes 2a
des mit der Klebstoff-Folie 3F einzufassenden Belchs 2 angepasst ist.

Die Fig. 7 zeigt einen typischen Wandteil 30 einer Autotüre. Dieser
Wandteil ist u.a. längs der mit 31 bezeichneten Kante mit einem
anderen Wandteil mittels einer Falznaht verbunden. Wie man leicht

- 5 -

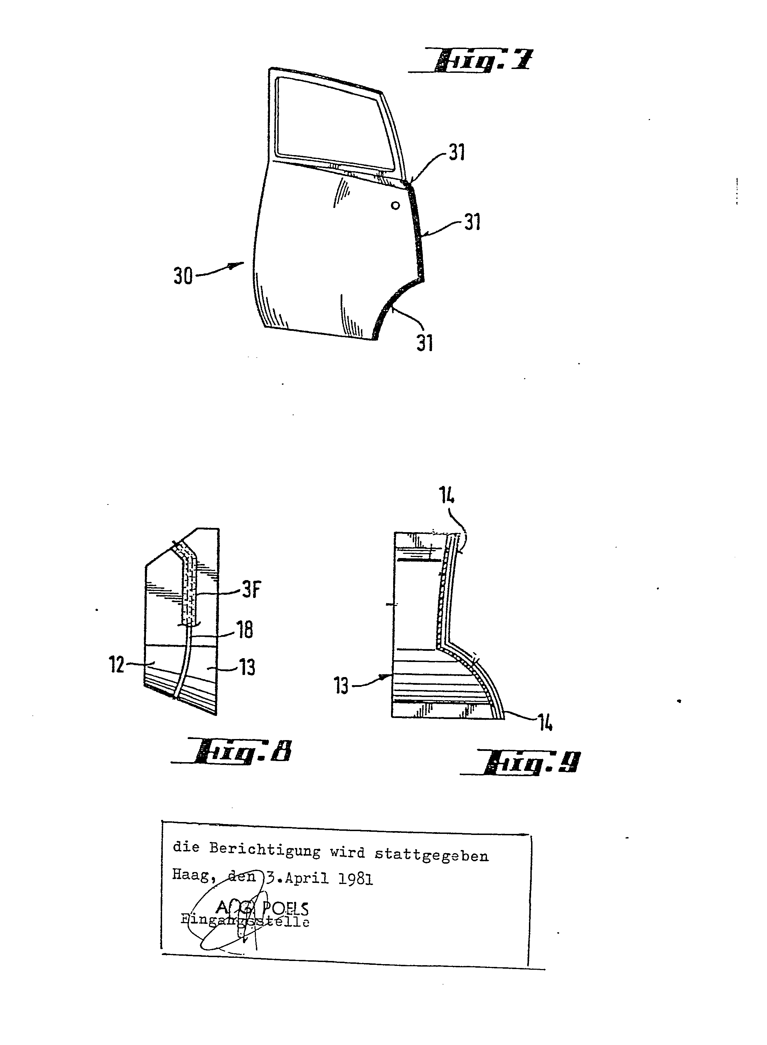

erkennt, ist die Kante bzw. der Falznahtverlauf räumlich gekrümmt und somit relativ kompliziert. Um auf diese Kante 31 mit der in den Fig. 2-6 dargestellten Vorrichtung einen Klebefolienstreifen applizieren zu können, müssen die Backen 12 und 13 und damit der Schlitz 18 zwischen ihnen die in den Fig. 8 und 9 in Draufsicht bzw. Seitensicht gezeigte Gestalt aufweisen.

Die Funktionsweise der Vorrichtung ist wie folgt:

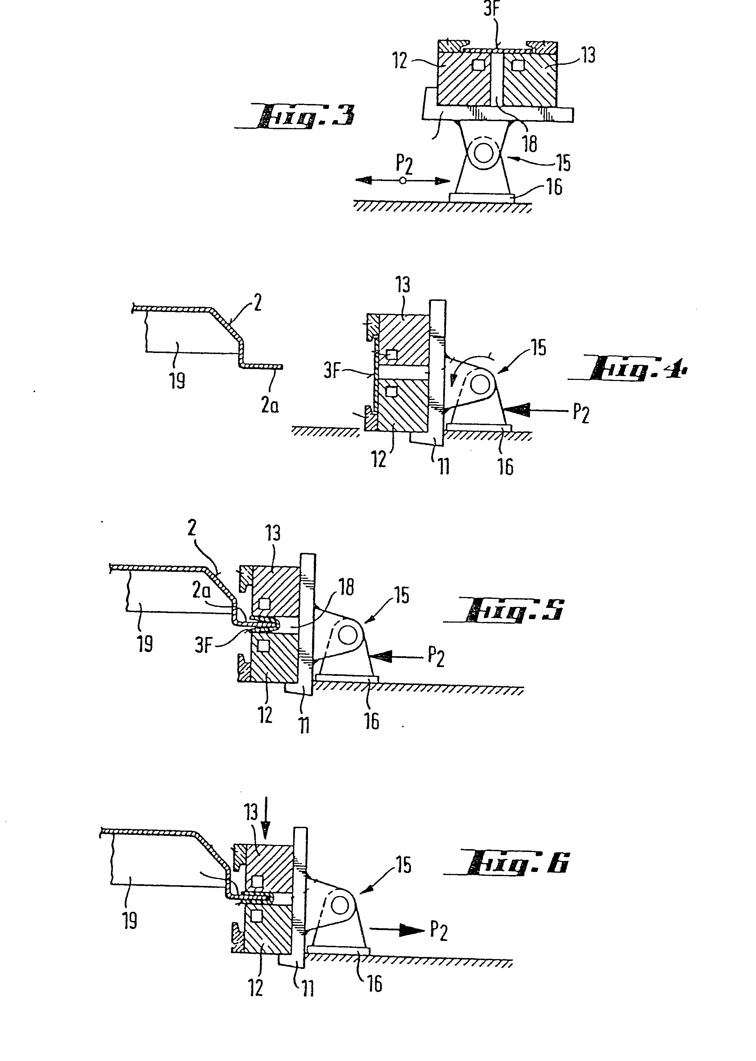

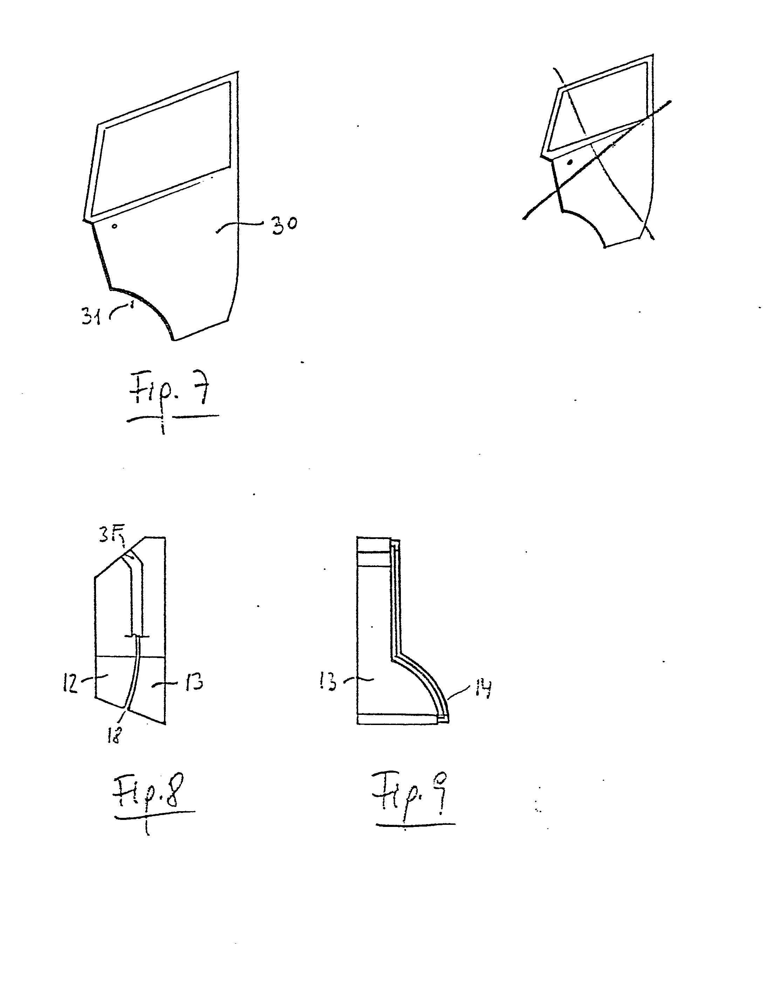

Zunächst werden die Backen 12 und 13 horizontal in die in Fig. 2 gezeigte Stellung grössten gegenseitigen Abstands gebracht und ein dem Blechrand 2a bzw. dem Schlitz 18 angepasster Streifen der Klebstoff-Folie 3F mittels der Fördereinrichtung 20 auf den Schlitz 18 gelegt. Nun werden die Backen einander etwas genähert, sodass die L-förmigen Halteelemente 14 den Streifen 3F seitlich übergreifen und dadurch festhalten (Fig. 3). Die Weite des Schlitzes 18 beträgt dabei noch etwa 3-4 mm. Anschliessend wird der Support 11 mitsamt den Backen 12 und 13 und dem darauf liegenden Streifen 3F in die Vertikale geschwenkt (Fig. 4) und gegen das in einer ortsfesten, nur andeutungsweise dargestellten Spannvorrichtung 19 festgehaltene Blech 2 verschoben. Dabei dringt der Rand 2a des Blechs 2 in den Schlitz 18 zwischen den Backen 12 und 13 ein, wobei der Streifen 3F um die Kante des Blechrands 2a umgeschlagen wird (Fig. 5). Nunmehr schliessen sich die Backen 12 und 13 vollständig und pressen den Klebstoff-Folienstreifen 3F beidseits gegen den Rand des Blechs 2. Damit ist die Einfassung des Blechrands 2a beendet und ein neuer Zyklus kann beginnen.

Die Haftung der Folie auf dem Blech kann verbessert werden durch leichtes Erwärmen des Bleches oder durch Verwendung einer selbstklebenden Folie. Ferner ist es auch zweckmässig, die Backen zu kühlen, damit die Klebstoff-Folie nicht an ihnen haften bleiben kann.

- 6 -

Falls die einzufassende Kante 2a des Blechs 2 bzw. der Schlitz 18 nicht geradlinig verläuft, wird der Streifen 3F beim Umschlagen um die Blechkante erheblich deformiert. Damit er diesen Deformationen gut folgen kann, ist es notwendig, dass sein Trägermaterial ausreichend flexibel bzw. nachgiebig ist. Vorzugsweise wird eine trägerlose Klebstoff-Folie verwendet.

Als Klebstoff-Folien kommen z.B. die unter den Markennamen Araldit- und Redux-Klebfilm von Ciba-Geigy angebotenen Folien in Frage.

Die Breite des Folien-Streifens 3F wird vorzugsweise so bemessen, dass der Streifen den umgebördelten Rand 1a des Blechs 1 um wenigstens etwa die Stärke des Blechs 1, vorzugsweise etwa 2-3 mm, überragt. Beim Härten des Klebstoffs mit Wärme schmilzt dieser und es ergibt sich dann die in Fig. 1 gezeigte Hohlkehle 3a, welche bewirkt, dass die Kante 1b des umgebördelten Blechrands 1a weniger ausgeprägt erscheint, sodass bei einer nachfolgenden Lackierung der Bleche auch die Kante einwandfrei mit Lack überdeckt ist.

Die Aushärtung der Klebstoffschicht 3 zwischen den beiden Blechen 1 und 2 erfolgt bei erhöhter Temperatur nach dem Zusammenpressen der Umbördelung. Die Temperatur hängt von der Art der verwendeten Klebstoff-Folie ab.

- 7 -

Patentansprüche
<hr />

1. Verfahren zur Applikation eines Streifens einer Klebefolie auf dem Rand eines Blechformteils, dadurch gekennzeichnet, dass man einen der Form des Rands (2a) des Blechformteils (2) angepassten Streifen (3F) der Klebefolie über einen entsprechend geformten, durch zwei aufeinander zu- und voneinander weg bewegbare Backen (12,13) gebildeten Schlitz (18) legt, das Blech mit seinem mit dem Streifen (3F) einzufassenden Rand (2a) in den Schlitz (18) einführt und dann die Backen (12,13) zusammenpresst, bis der Folienstreifen auf dem Blech haftet.

2. Verfahren nach Anspruch 1, dadurch gekennzeichnet, dass man das Blech (2) während der Applikation des Folienstreifens (3F) kurzzeitig leicht erwärmt.

3. Verfahren nach einem der Ansprüche 1 und 2, dadurch gekennzeichnet, dass eine Klebefolie (3F) mit einem Klebstoff auf der Basis von thermohärtendem Einkomponenten-Klebstoff verwendet wird.

4. Verfahren nach einem der Ansprüche 1 bis 3, dadurch gekennzeichnet, dass eine Klebefolie (3F) ohne oder mit einem leicht deformierbaren Träger verwendet wird.

5. Vorrichtung zur beidseitigen Einfassung des Randes (2a) eines Blechformteils (2) oder dergleichen mit einem Streifen (3F) eines klebfähigen Materials, gekennzeichnet durch zwei Backen (12,13), die zwischen sich einen der geometrischen Form des Blechrandes (2a) angepassten Schlitz (18) variabler Weite bilden, und durch Mittel (13A), um die beiden Backen gegeneinander zu pressen bzw. auseinander zu bewegen.

6. Vorrichtung nach Anspruch 5, dadurch gekennzeichnet, dass die Backen (12,13) mit Halterungen (14) für den klebfähigen Streifen (3F) versehen sind.

7. Vorrichtung nach Anspruch 6, dadurch gekennzeichnet, dass die Halterungen (14) durch im wesentlichen L-förmige Elemente gebildet sind, die den Streifen (3F) in einer ersten, näheren gegenseitigen Position der beiden Backen seitlich übergreifen, und aus welcher Position der Streifen während dem Aufschieben auf das einzufassende Blech (2) herausgleiten kann.

8. Vorrichtung nach einem der Ansprüche 5 bis 7, dadurch gekennzeichnet, dass die Backen (12,13) mit einer Flüssigkeitskühlung (17) ausgerüstet sind.

9. Vorrichtung zur Applikation eines Streifens einer Klebefolie auf den Rand eines Blechformteils, gekennzeichnet durch eine Halterung (19) für das Blechformteil (2), zwei Backen (12,13), die zwischen sich einen der geometrischen Form des Blechrands (2a) angepassten Schlitz (18) variabler Weite bilden, durch Mittel (13A) um die beiden Backen gegeneinander zu pressen bzw. auseinander zu bewegen, durch Mittel (14) um einen der Form des Blechrands (2a) angepassten Streifen (3F) einer Klebefolie auf dem Schlitz (18) festzuhalten und durch Antriebsmittel (15, 15A, 16, 16A) um eine Relativbewegung zwischen den Backen (12,13) und dem Blechformteil (2) zu bewirken derart, dass der Rand (2a) des Formteils in den Schlitz (18) hineinbewegt, die Backen geschlossen und wieder geöffnet und der Rand schliesslich wieder aus dem Schlitz herausbewegt wird.

10. Vorrichtung nach Anspruch 9, dadurch gekennzeichnet, dass eine Zuführeinrichtung (20) vorgesehen ist, die die Streifen (3F) den beiden Backen (12,13) automatisch zuführt.

**Fig. 1**

**Fig. 2**

0030918

Fig.3

Fig.4.

Fig.5

Fig.6

Fig. 7

Fig. 8

Fig. 9

0030918

Fig.7

Fig.8

Fig.9

die Berichtigung wird stattgegeben

Haag, den 3.April 1981

A.G. POELS
Eingangsstelle

Nummer der Anmeldung

EP 80 81 0379

Europäisches
Patentamt

**EUROPÄISCHER RECHERCHENBERICHT**

| | EINSCHLÄGIGE DOKUMENTE | | KLASSIFIKATION DER ANMELDUNG (Int. Cl. ⁴) |
|---|---|---|---|
| Kategorie | Kennzeichnung des Dokuments mit Angabe, soweit erforderlich, der maßgeblichen Teile | betrifft Anspruch | |
| D/A | BE - A - 444 014 (PATENTVER-SCHLUSS-DUPLEX) | 1 | B 21 D 39/02 |
| D/A | FR - A - 2 252 147 (THE METAL BOX CO.) | 1 | |
| | & DE - A - 2 455 773 | | |
| D/A | US - A - 3 125 056 (KAISER) | 1 | |
| A | FR - A - 1 420 142 (THE GOODYEAR TIRE & RUBBER CO.) | 1 | |
| A | FR - A - 1 479 958 (UNITED SHOE MACHINERY CORP.) | 1 | RECHERCHIERTE SACHGEBIETE (Int. Cl ⁷) |
| A | DE - C - 703 725 (ZEIGMEISTER) | 1 | B 21 D |
| A | DE - C - 764 584 (VAN DER ZYPEN) | 1 | |
| A | US - A - 3 314 388 (DAVIS) | 1 | |
| A | FR - A - 1 262 219 (TRIERER WALZ-WERK) | 1 | |
| A | FR - A - 1 363 255 (FORGES DE STRASBOURG) | 1 | |
| A | FR - A - 2 396 603 (INDESIT IND. ELETTRODO-MITICI ITA-LIANA) | 1 | |

------

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-03-1981 | PEETERS |

EPA form 1503.1 06.78